(19) Europäisches Patentamt
European Patent Office
Office européen des brevets

(11) Numéro de publication: **0 089 353**
**B1**

(12) # FASCICULE DE BREVET EUROPEEN

(45) Date de publication du fascicule du brevet: **08.01.86**

(51) Int. Cl.⁴: **C 01 G 1/06**, C 01 F 7/60, C 01 G 49/10

(21) Numéro de dépôt: **82902821.6**

(22) Date de dépôt: **29.09.82**

(86) Numéro de dépôt international: **PCT/FR 82/00160**

(87) Numéro de publication internationale: **WO 83/01249 (14.04.83** Gazette **83/9)**

(54) **PROCEDE DE CHLORURATION SELECTIVE DE MELANGES D'OXYDES METALLIQUES D'ORIGINE NATURELLE OU SYNTHETIQUE.**

(30) Priorité: **01.10.81 FR 8118825**

(43) Date de publication de la demande: **28.09.83 Bulletin 83/39**

(45) Mention de la délivrance du brevet: **08.01.86 Bulletin 86/2**

(84) Etats contractants désignés: **DE**

(56) Documents cités:
**DE - C - 628 953**
**FR - A - 1 126 225**
**FR - A - 2 334 625**
**FR - A - 2 338 899**
**FR - A - 2 415 663**
**FR - A - 2 432 992**
**FR - A - 2 457 256**
**US - A - 1 858 272**
**US - A - 1 875 105**
**US - A - 1 982 194**
**US - A - 2 387 228**
**US - A - 4 035 169**
**US - A - 4 252 774**

(73) Titulaire: **ALUMINIUM PECHINEY, 28, rue de Bonnel, F-69433 Lyon Cedex 3 (FR)**

(72) Inventeur: **SEON, Françoise, 170, avenue du Président Wilson, F-93100 Montreuil (FR)**
Inventeur: **PICARD, Gérard, 2, rue du Séminaire de Conflans, F-94220 Charenton-le-Pont (FR)**
Inventeur: **TREMILLON, Bernard, 44, rue de Gometz, F-91440 Bures-sur-Yvette (FR)**
Inventeur: **BERTAUD, Yves, l'Echaillon Cidex 1702, F-73300 Saint-Jean de Maurienne (FR)**

(74) Mandataire: **Desgigot, Jean et al, PECHINEY 28, rue de Bonnel, F-69433 Lyon Cédex 3 (FR)**

**EP 0 089 353 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de chloruration sélective en bain de sels fondus, au moyen de mélanges gazeux chlorurants, de mélanges d'oxydes métalliques, simples ou complexes, d'origine naturelle, tels que des minerais, ou d'origine synthétique, tels que des boues rouges ou autres concentrés d'oxydes métalliques, comportant au moins l'un des éléments à valoriser, aluminium, titane, fer et silicium, ainsi que les impuretés accompagnant les éléments précités, conduisant à l'obtention de chlorures métalliques isolés de grande pureté.

Depuis longtemps déjà, il est connu de produire des chlorures métalliques en bains de sels fondus par chloruration d'oxydes métalliques ou de minerais en contenant, au moyen d'une source de chlore, en présence d'un agent réducteur.

En effet, l'importance économique que revêt l'obtention industrielle de chlorures métalliques et, plus particulièrement, du chlorure d'aluminium pour les applications catalytiques ou pour la production électrolytique de métal, tel que l'aluminium, a conduit l'homme de l'art à effectuer des recherches approfondies en ce domaine. C'est ainsi que de nombreux procédés ont été décrits dans la littérature spécialisée, qui concernent les procédés de production de chlorures métalliques anhydres par carbochloration en bains de sels fondus d'oxydes métalliques ou de minerais en contenant.

Un premier document, le brevet français N° 1126225 par exemple, décrit la réaction d'un matériau contenant du titane, comme du rutile, de l'ilménite ou de la poudre d'oxyde de titane, avec le chlore gazeux en présence d'un agent réducteur, au sein d'un bain de sels fondus constitué par un mélange de chlorure et/ou fluorure de métaux alcalins et/ou de métaux alcalino-terreux à une température supérieure au point de fusion du mélange des halogénures métalliques (de 850°C à 900°C), assurant la production de chlorure de titane.

Un autre document, le FR-A-N° 2334625 propose un procédé d'obtention de chlorure d'aluminium anhydre par carbochloration d'un minerai alumineux et, plus précisément, d'alumine, en bain de sels fondus. Ce procédé consiste en la mise en contact dans un bain de sels fondus formé d'au moins un chlorure de métal alcalin et/ou alcalino-terreux et de chlorure d'aluminium, d'une source d'alumine avec une source de chlore en présence d'un agent réducteur non gazeux tel que le carbone, le chlorure d'alumine anhydre étant recueilli sous une forme gazeuse à la sortie du bain, en même temps que les gaz d'échappement, pour être condensé dans une zone refroidie à cet effet.

Toutefois, et cela est un inconvénient, l'obtention de chlorures métalliques anhydres en bains de sels fondus selon les procédés décrits dans la littérature précitée, exige la présence et l'intervention d'un agent réducteur pour assurer la transformation de l'oxyde métallique en un chlorure selon la réaction de carbochloration, telle celle par exemple concernant l'alumine:

$$Al_2O_3+3/2\ C+3\ Cl_2 \rightarrow Al_2Cl_6+3/2\ CO_2+Q\ cal.$$

Un tel agent réducteur est, dans la majorité des cas, sous une forme solide, mais peut être sous une forme liquide ou gazeuse.

Quand il est sous une forme solide, ce réducteur est préférentiellement du carbone, mais il peut être choisi parmi d'autres réducteurs tel que le soufre, par exemple. Quand le réducteur est le carbone, il provient des sources habituelles bien connues de l'homme de l'art, c'est-à-dire les charbons, le pétrole et leurs dérivés. Cet agent est mis en œuvre après avoir éventuellement subi un traitement de purification ainsi qu'un traitement de broyage, de telle manière qu'il se présente sous l'aspect de particules solides de faibles dimensions, proches de celles de l'oxyde métallique destiné à la carbochloration.

Ainsi, le bain de sels fondus utilisé pour la carbochloration est alimenté, en général, au moyen de poudre d'oxyde métallique et de carbone, de granulométries sensiblement identiques exigeant un broyage préalable de ces deux matériaux. Mais, dans un procédé plus élaboré, la littérature spécialisée suggère même d'alimenter le bain de sels fondus au moyen d'agglomérats mixtes formés d'oxyde métallique et de l'agent réducteur tel que le carbone ou ses dérivés, agglomérats dont la formation est obtenue par exemple par pressage, filage ou granulation au drageoir d'un mélange plus ou moins pâteux des deux constituants, en utilisant un liant généralement liquide tel que de l'eau ou des goudrons de houille ou pétrole, puis, par traitement thermique des granulés obtenus à une température correspondant à l'usage auquel on les destine.

Mais, comme il a été énoncé, l'agent réducteur peut également être sous une forme liquide ou gazeuse dans les conditions normales de températures et de pression. Tel est le cas, par exemple, du phosgène ($COCl_2$) et du tétrachlorure de carbone ($CCl_4$) qui, dans les conditions d'exploitation du bain de sels fondus, sont simultanément sources d'agent réducteur et de chlore en raison de leur décomposition thermique ou des phénomènes réactionnels se produisant. Tel est le cas de l'oxyde de carbone (CO) qui, réducteur d'origine gazeuse, est introduit en mélange stœchiométrique avec le chlore dans le bain de sels fondus pour constituer le mélange gazeux de carbochloration de l'oxyde métallique concerné.

De plus, et cela est un autre inconvénient, l'obtention de chlorure métallique anhydre par carbochloration d'un oxyde métallique en bain de sels fondus exige une température de bain qui, dans la majorité des cas, est très élevée, surpassant en général la température de 700°C pour atteindre des températures de l'ordre de 800-850°C, dans le but de disposer d'une cinétique réactionnelle convenable.

A ces températures, l'énergie thermique nécessaire est très importante et exige des combustibles plus nobles que les gaz pauvres de récupération tels que du fuel par exemple. En outre, à ces températures, les revêtements réfractaires des réacteurs

de carbochloration sont beaucoup plus sollicités et, par-là même, d'une durée de vie diminuée. Enfin, à ces températures, les bains de sels fondus peuvent présenter des tensions de vapeurs importantes qui exigeraient des installations coûteuses et complexes de captation, de traitement et de recyclage de ces effluents.

Outre les inconvénients précités, un autre inconvénient se manifeste dès lors que la chloruration par carbochloration en bain de sels fondus est effectuée sur un minerai naturel, c'est-à-dire sur un mélange d'oxydes métalliques divers et non pas sur un seul oxyde métallique tiré d'un minerai par un procédé d'extraction chimique. C'est ainsi, par exemple, que le procédé de carbochloration de l'oxyde d'aluminium décrit dans FR-A-N° 2334625, préconise comme source préférée d'oxyde d'aluminium, l'alumine purifiée extraite de la bauxite par le procédé Bayer, tandis que les autres composés insolubles tels que le fer, le titane et le silicium sont éliminés.

Mais, dès lors que cette source d'oxyde d'aluminium est un minerai naturel tels que le kaolin, la bauxite, un schiste houiller ou non, il est évident pour l'homme de l'art que l'utilisation d'une telle source pour la production de chlorure d'aluminium par carbochloration en bains de sels fondus conduit à l'obtention d'un mélange gazeux de chlorures métalliques. Ce mélange, dans lequel peut prédominer l'un des chlorures, tel que le chlorure d'aluminium par exemple, quand il est fait usage de bauxite, contient également les chlorures des autres métaux présents dans le minerai comme impuretés, tels que par exemple les chlorures de silicium ($SiCl_4$), de titane ($TiCl_4$) et de fer ($FeCl_3$ et $Fe_2Cl_6$), quand le minerai est de la bauxite.

Pour isoler le chlorure métallique à privilégier, par exemple le chlorure d'aluminium, à partir d'un tel mélange de chlorures métalliques gazeux, il est fondamental de disposer d'un procédé permettant leur séparation.

Pour permettre la réalisation de cette séparation, la littérature spécialisée a décrit divers procédés dont, en particulier, des procédés pratiquant la condensation sélective ou la distillation fractionnée des chlorures métalliques à partir de leur mélange.

Un tel procédé est décrit, par exemple, dans le brevet US-A-N° 2387228 qui propose d'extraire les chlorures de titane ($TiCl_4$) et de silicium ($SiCl_4$) d'un mélange contenant également des chlorures d'aluminium ($AlCl_3$ et $Al_2Cl_6$) et ferrique ($FeCl_3$ et $Fe_2Cl_6$), procédé qui consiste à chauffer le mélange au-dessus de la température d'ébullition des chlorures de silicium et de titane pour en sortir sous forme gazeuse les chlorures précités et les séparer grâce à l'importante différence existant entre leurs températures d'ébullition à la pression atmosphérique. Le mélange de chlorure d'aluminium et chlorure ferrique est recueilli sous la forme d'un résidu solide qui peut être à son tour soumis à une distillation fractionnée sous pression permettant de séparer le chlorure d'aluminium gazeux du chlorure ferrique liquide.

Un autre procédé de séparation par distillation fractionnée du chlorure d'aluminium à partir d'un mélange gazeux contenant ce chlorure et d'autres chlorures métalliques est décrit dans FR-A-N° 2457256. Le procédé consiste à soumettre le mélange de chlorures gazeux à un certain nombre d'étapes de distillation fractionnée en utilisant un ensemble de colonnes de distillation et en maintenant une quantité suffisante de chlorure de titane ($TiCl_4$) dans toute colonne en fonctionnement, de manière à séparer au moins un chlorure métallique, y compris le chlorure de silicium, à partir d'un mélange de gaz contenant du chlorure d'aluminium et des chlorures de titane, de silicium et de fer ferrique, toute colonne fonctionnant à des températures qui comprennent les points de sublimation ou de fusion du chlorure d'aluminium à la pression de fonctionnement, de telle façon que la solidification du chlorure soit empêchée dans la colonne.

Cependant, malgré les améliorations apportées tant dans le domaine de la distillation fractionnée que dans celui de la condensation sélective pour séparer par exemple le chlorure d'aluminium à partir d'un mélange de gaz contenant d'autres chlorures métalliques, il apparaît encore certains inconvénients qui peuvent rendre inintéressante l'exploitation de tels procédés de séparation. Est connu, par exemple, le phénomène de désublimation du chlorure d'aluminium de l'état gazeux à l'état solide, qui peut gêner une étape de distillation fractionnée ou la rendre impossible par occlusion.

De plus, l'obtention de produits purs, c'est-à-dire bien séparés, nécessite des installations industrielles très élaborées et, par-là même, très coûteuses.

En effet, malgré des différences de températures d'ébullition entre $FeCl_3$, $Fe_2Cl_6$ et $AlCl_3$, $Al_2Cl_6$, apparemment suffisantes pour les séparer par condensation, il se forme souvent un complexe hexachloré de fer et d'aluminium de même volatilité que le chlorure d'aluminium et qu'il est très difficile de séparer de ce dernier. Le chlorure ferrique devient alors un élément contaminant du chlorure d'aluminium puisqu'il ne peut en être séparé d'une manière suffisamment sélective par condensation. Et, dès lors, ce chlorure d'aluminium contaminé ne peut plus être utilisé dans les procédés de production de l'aluminium.

Enfin, même s'il apparaît raisonnablement possible de réaliser une telle séparation des chlorures d'aluminium, de titane, de fer et de silicium, à partir de mélange gazeux provenant de la carbochloration d'un minerai tel que la bauxite, il se révèle souvent peu exploitable pour des raisons économiques car, en général, bien que de tels procédés soient orientés sur l'obtention d'un seul chlorure à valoriser, ils produisent en fait un mélange de chlorures métalliques augmentant considérablement la consommation d'agent de chloruration par rapport à celle strictement nécessaire pour la seule production du chlorure recherché.

C'est pourquoi d'autres types de procédés de carbochloration de minerais sont proposés par la littérature spécialisée, utilisant d'autres modes de

séparations des chlorures métalliques obtenus. Le brevet US-A-N° 4252774 illustre un de ces procédés. Selon ce procédé particulier, il est possible de produire du chlorure d'aluminium à partir d'un minerai contenant sous forme oxydée de l'aluminium ainsi que du fer, du titane et du silicium par carbochloration en un bain de sels fondus.

Le mélange gazeux effluent contenant des chlorures d'aluminium, de fer, de titane et de silicium, ainsi que de l'oxyde de carbone, est alors refroidi pour condenser le chlorure d'aluminium et le chlorure ferrique, tandis que les chlorures de titane et de silicium restent en phase gazeuse pour effectuer une séparation ultérieure. Le mélange condensé de chlorures d'aluminium et de fer est ensuite amené à la température de formation d'une phase gazeuse constituée par le mélange desdits chlorures, puis ladite phase gazeuse est mise en contact avec un sulfure d'aluminium provoquant la précipitation de sulfures de fer et la formation complémentaire de chlorure d'aluminium gazeux, permettant une séparation aisée du chlorure d'aluminium.

Cependant, un tel procédé ne peut s'appliquer d'une manière économique à la carbochloration d'un minerai alumineux, qu'à la condition de disposer d'un minerai riche en aluminium et le plus pauvre possible en autres éléments tels que le fer, le titane et le silicium; en d'autres termes, il est essentiellement orienté sur la carbochloration des bauxites. En effet, dès lors que ce procédé atteint l'étape de séparation des chlorures d'aluminium et de fer, il exige la consommation d'une quantité de sulfure d'aluminium d'autant plus importante que la quantité de $FeCl_3$ et $Fe_2Cl_6$ est plus élevée, sulfure d'aluminium dont la préparation nécessite une alumine pure provenant par exemple du procédé Bayer.

De plus, alors que ce procédé n'est pas économiquement favorable puisque consommateur d'alumine pure, il faut également constater que le chlorure d'aluminium obtenu dispose d'une pureté insuffisante.

Consciente de l'intérêt que peut offrir à l'homme de l'art un procédé d'obtention de chlorures métalliques par chloruration en bains de sels fondus de mélanges d'oxydes métalliques d'origine naturelle ou d'origine synthétique, mais consciente également des inconvénients attachés aux procédés décrits antérieurement dans la littérature spécialisée, la demanderesse poursuivant ses recherches a trouvé et mis au point un procédé de chloruration sélective en bains de sels fondus sans qu'il soit nécessaire d'avoir recours à des solutions aussi complexes et coûteuses.

L'invention concerne donc un procédé d'extraction des constituants métalliques d'une matière contenant des oxydes de fer, titane, aluminium, silicium simples ou complexes, d'origine naturelle ou synthétique, qui consiste à broyer et calciner la matière de départ, puis à la traiter en des étapes successives par divers agents chlorurants gazeux, caractérisé en ce que l'on met en suspension la matière calcinée dans un bain de sels fondus à température sensiblement constante comprise entre 350 et 750°C, on y introduit un premier agent chlorurant constitué soit d'un mélange HCl gaz + $H_2O$ vapeur, soit d'un mélange $Cl_2$ gaz + $O_2$ gaz + HCl gaz, on extrait le chlorure ferrique gazeux formé, on introduit dans le bain résultant un deuxième agent chlorurant constitué d'un mélange HCl gaz + CO gaz + $H_2$ gaz, on extrait le chlorure de titane gazeux formé, on introduit dans le bain résultant un troisième agent chlorurant constitué, soit d'un mélange $Cl_2$ gaz + CO gaz + HCl gaz, soit d'un mélange $COCl_2$ gaz + HCl gaz, on extrait le mélange gazeux des chlorures de silicium et d'aluminium formés, enfin on sépare de façon connue les chlorures de ce dernier mélange.

Dans le cadre de l'invention, et pour la suite de son exposé, l'oxyde simple se définit comme étant un composé contenant le métal concerné et de l'oxygène, tandis que l'oxyde complexe est un composé contenant outre le métal et l'oxygène, soit un autre métal, soit un halogène dont des exemples illustratifs en sont aluminate, silicoaluminate, ilménite, oxychlorure ou chlorure hydraté.

De même, on entend par mélange chlorurant un mélange d'au moins deux gaz dont l'un contient du chlore à divers degrés d'oxydation au cours de la réaction.

Enfin, on considérera par la suite qu'un mélange chlorurant est d'autant plus fort qu'il assure la chloruration d'un oxyde métallique de stabilité thermodynamique plus élevée.

Le bain de sels fondus utilisé dans le cadre de l'invention, dont les compositions ont été très largement divulguées par la littérature spécialisée, se compose en général d'au moins un halogénure alcalin et/ou alcalino-terreux. Parmi les halogénures qui peuvent être introduits, il a été remarqué comme souhaitable d'utiliser les chlorures de métaux alcalins et/ou alcalino-terreux, de préférence les chlorures de lithium, de sodium, de potassium, ainsi que les chlorures de calcium, de baryum et de magnésium et, éventuellement, du chlorure d'aluminium.

La température du bain de sels fondus destiné à la carbochloration selon l'invention se situe entre son point de fusion et son point d'ébullition dans les conditions d'utilisation. La demanderesse a constaté que l'intervalle des températures pratiquées se situait entre 350 et 750°C et, plus particulièrement, entre 450 et 650°C.

Grâce à de nombreuses expérimentations par injection de divers mélanges gazeux de chloruration dans lesdits bains de sels fondus, dans lesquels les oxydes métalliques se trouvent en suspension, la demanderesse a pu mettre en évidence puis comparer les pouvoirs chlorurants de divers mélanges gazeux, enfin déterminer leur caractère sélectif en fonction de la stabilité thermodynamique des oxydes métalliques à chlorurer et, en particulier, de la stabilité thermodynamique de ceux énumérés précédemment.

Les tableaux I et II indiquent pour chaque oxyde métallique considéré, classé dans un ordre de stabilité thermodynamique croissante, le mélange chlorurant sélectif en bain de sels fondus, constitué par l'eutectique LiCl-KCl, ainsi que les pres-

sions partielles d'usage pour chacun des gaz intervenant dans le mélange chlorurant.

Or, les mélanges d'oxydes métalliques, d'origine naturelle ou synthétique, destinés à la chloruration, peuvent éventuellement contenir une alumine réactive ou un composé tel qu'un aluminate ou un hydrate d'aluminium pouvant donner naissance à une alumine réactive dans les conditions de chloruration.

Lors de nombreuses expériences de chloruration, la demanderesse a constaté que la présence d'une telle alumine réactive au sein du bain de sels fondus entraînait le départ simultané de chlorure d'aluminium et de chlorure ferrique du fait du caractère comparable de la stabilité thermodynamique des deux oxydes.

C'est pourquoi le tableau I ci-après rassemble les conditions générales du procédé de chloruration sélective selon l'invention concernant les mélanges d'oxydes métalliques d'origine naturelle ou synthétique, exempts initialement d'alumine réactive et/ou ne conduisant pas à sa formation dans le bain de sels fondus, tandis que le tableau II ci-après, variante du procédé selon l'invention, rassemble les conditions particulières du procédé de chloruration sélective, quand les mélanges d'oxydes métalliques contiennent de l'alumine réactive et/ou conduisant à sa formation au sein du bain de sels fondus.

*Tableau I*

| Oxydes métalliques classés par stabilité thermodynamique croissante | Ordre des opérations | Mélange de chloruration sélective | Pressions partielles d'usage pour chaque constituant du mélange chlorurant et complément éventuel à la pression de service par un gaz inerte |
|---|---|---|---|
| $Fe_2O_3$ | 1 | HCl gaz + $H_2O$ vapeur | P(HCl) = 0,1 à 1 bar, de préférence comprise entre 0,7 à 1 bar<br>$P(H_2O$ vapeur$) \leqslant 0,1$ P(HCl) |
| | | ou | |
| | | $Cl_2$ gaz + $O_2$ gaz + HCl gaz | $P(Cl_2) = 0,1$ à 1 bar, de préférence 0,7 à 1 bar<br>$P(O_2) \leqslant 0,1$ bar et de préférence $< 0,001$ bar<br>$P(HCl) \leqslant 0,01$ bar, de préférence égale à 0,01 bar |
| $TiO_2$ | 2 | HCl gaz + CO gaz + $H_2$ gaz | P(HCl) comprise entre 0,45 et 0,8 bar<br>P(CO) comprise entre 0,45 et 0,1 bar<br>$P(H_2)$ comprise entre 0,05 et 0,15 bar, préférentiellement égale à 0,1 bar |
| $Al_2O_3$<br>$SiO_2$ | 3 | $Cl_2$ gaz + CO gaz + HCl gaz | $P(Cl_2)$ et P(CO) comprise entre 0,01 et 0,5 bar<br>P(HCl) < à 1 bar |
| | | ou | |
| | | $COCl_2$ gaz + HCl gaz | $P(COCl_2)$ comprise entre 0,01 et 1 bar<br>P(HCl) < 1 bar |

Selon le tableau I, le procédé de chloruration sélective d'un mélange d'oxydes métalliques, simples ou complexes, d'origine naturelle ou synthétique, comportant les éléments à valoriser, aluminium, titane, fer et silicium, ainsi que les impuretés accompagnant les éléments précités, mais exempt d'alumine réactive et/ou de composés pouvant donner naissance à ladite alumine, consiste d'abord à broyer finement ledit mélange d'oxydes, puis à le mettre en suspension dans le bain de sels fondus maintenu à la température souhaitée.

La chloruration sélective de l'oxyde thermodynamiquement le moins stable, c'est-à-dire l'oxyde ferrique $Fe_2O_3$, contenu dans le mélange des oxydes métalliques, s'effectue sans chloruration des oxydes de titane, d'aluminium et de silicium, au moyen de l'un ou l'autre des deux mélanges chlorurants de nature et compositions suivantes, l'un étant:

– HCl gaz + $H_2O$ vapeur – pour lequel la pression partielle du chlorure d'hydrogène P(HCl) est comprise entre 0,1 et 1 bar, mais de préférence entre 0,7 et 1 bar, et la pression partielle de vapeur d'eau $P(H_2O)$ est inférieure ou au plus égale à 0,1 fois la pression partielle de HCl [0,1·P(HCl)], l'autre étant:

– $Cl_2$ gaz + $O_2$ gaz + HCl gaz – pour lequel la pression partielle du chlore $P(Cl_2)$ est comprise entre 0,1 et 1 bar, mais de préférence entre 0,7 et 1 bar, tandis que la pression partielle d'oxygène $P(O_2)$ est inférieure ou au plus égale à 0,1 bar et, de préférence, inférieure ou au plus égale à 0,001 bar et que la pression partielle du chlorure d'hydrogène P(HCl) peut être inférieure à 0,01 bar mais est, de préférence, égale à 0,01 bar.

Puis, la chloruration sélective de l'oxyde de titane s'effectue à partir du bain de sels fondus ne contenant plus l'oxyde ferrique, au moyen du mélange chlorurant de nature et compositions suivantes:

$HCl$ gaz + $CO$ gaz + $H_2$ gaz

pour lequel la pression partielle du chlorure d'hydrogène P(HCl) est comprise entre 0,45 et 0,8 bar, la pression partielle du monoxyde de carbone P(CO) est comprise entre 0,45 et 0,1 bar et la pression partielle d'hydrogène est comprise entre 0,05 et 0,15 bar et, de préférence, égale à 0,1 bar.

Enfin, la chloruration de l'alumine et de la silice s'effectue à partir du bain de sels fondus ne contenant plus ni l'oxyde ferrique, ni l'oxyde de titane, au moyen de l'un ou l'autre des deux mélanges chlorurants de nature et de composition suivantes, l'un étant:

– $Cl_2$ gaz + $CO$ gaz + $HCl$ gaz, pour lequel les pressions partielles du chlore P($Cl_2$) et du monoxyde de carbone P(CO) sont comprises entre 0,01 et 0,5 bar et la pression partielle du chlorure d'hydrogène est inférieure à 1 bar,

l'autre étant:

– $COCl_2$ gaz + $HCl$ gaz pour lequel la pression partielle du phosgène P($COCl_2$) est comprise entre 0,01 et 1 bar, et la pression partielle du chlorure d'hydrogène est inférieure à 1 bar, la séparation ultérieure de $AlCl_3$ d'avec $SiCl_4$ s'effectuant facilement par condensation en raison de l'écart très important existant entre les températures de sublimation et d'ébullition de ces deux chlorures $AlCl_3$: 183°C et $SiCl_4$: 57,6°C.

*Tableau II*

| Oxydes métalliques classés par stabilité thermodynamique croissante | Ordre des opérations | Mélange de chloruration sélective | Pressions partielles d'usage pour chaque constituant du mélange chlorurant et complément éventuel à la pression de service par un gaz inerte |
|---|---|---|---|
| $Al_2O_3$ dite réactive | 1-1 | $HCl$ gaz+$H_2$ gaz | P(HCl) comprise entre 0,1 et 1 bar, de préférence comprise entre 0,3 et 0,9 bar<br>P($H_2$) comprise entre 0,01 et 0,9 bar et, de préférence, entre 0,05 et 0,2 bar |
| Oxydes de fer ramenés à un degré d'oxydation II sous forme chlorure au moyen de l'opération 1-1 | 1-2 | $Cl_2$ gaz+$O_2$ gaz | P($Cl_2$) comprise entre 0,01 et 1 bar<br>P($O_2$) $\leqslant$0,1 bar et, de préférence, $\leqslant$0,01 bar |
| $TiO_2$ | 2 | $HCl$ gaz+$CO$ gaz +$H_2$ gaz | P(HCl) comprise entre 0,45 et 0,8 bar<br>P(CO) comprise entre 0,45 et 0,1 bar<br>P($H_2$) comprise entre 0,05 et 0,15 bar, préférentiellement égale à 0,1 bar |
| $Al_2O_3$<br>$SiO_2$ | 3 | $Cl_2$ gaz+$CO$ gaz +$HCl$ gaz | P($Cl_2$) et P(CO) comprise entre 0,01 et 0,5 bar<br>P(HCl)<1 bar |
| | | ou | |
| | | $COCl_2$ gaz+$HCl$ gaz | P($COCl_2$) comprise entre 0,01 et 1 bar<br>P(HCl)<1 bar |

Selon le tableau II, variante du procédé selon l'invention, la chloruration sélective concerne un mélange d'oxydes métalliques, simples ou complexes d'origine naturelle ou synthétique, comportant de l'alumine stable, telle que de l'alumine α ou γ par exemple, l'un au moins des éléments à valoriser, fer, titane et silicium, et de l'alumine réactive et/ou un composé conduisant à sa formation, ainsi que les impuretés accompagnant les éléments précités.

Selon cette variante, on effectue la chloruration de l'alumine réactive et de l'oxyde ferrique et l'extraction du seul chlorure d'aluminium provenant de l'alumine réactive, tandis que le fer reste en solution dans le bain sous forme de chlorure ferreux.

Le mélange chlorurant, dont il est fait usage dans ce cas, est de nature et de composition suivantes:

$HCl$ gaz + $H_2$ gaz

pour lequel la pression partielle du chlorure d'hydrogène P(HCl) est comprise entre 0,1 et 1 bar et, de préférence, entre 0,3 et 0,9 bar et la pression partielle d'hydrogène P($H_2$) est comprise entre 0,01 et 0,9 bar et, de préférence, entre 0,05 et 0,2 bar.

Le fer, maintenu en solution dans le bain sous forme de chlorure ferreux, est transformé en chlorure ferrique et extrait sous cette dernière forme au moyen du mélange gazeux de nature et composition suivantes:

$Cl_2$ gaz + $O_2$ gaz

pour lequel la pression partielle de chlore P($Cl_2$) est comprise entre 0,01 et 1 bar et, de préférence, entre 0,7 et 1 bar, et celle de l'oxygène P($O_2$) est inférieure et au plus égale à 0,1 bar et, de préférence, inférieure et au plus égale à 0,01 bar.

Les étapes suivantes de chloruration sélective de l'oxyde de titane, puis de l'alumine et de la silice, sont identiques à celles précédemment décrites dans le procédé de chloruration sélective selon le tableau I.

Dans le procédé selon l'invention et sa variante, la somme des pressions partielles de chaque constituant des mélanges gazeux est, en général, égale à la pression de service, c'est-à-dire à la pression sous laquelle sont extraits les chlorures métalliques formés. Dans le cas contraire, la pression de service peut être atteinte grâce à l'usage d'un gaz inerte tel que l'azote.

Ainsi, tous les mélanges gazeux utilisés pour la chloruration sélective d'un mélange d'oxydes métalliques, simples ou complexes, d'origine naturelle ou synthétique, comportant les éléments à valoriser, aluminium, titane, fer et silicium, ainsi que les impuretés accompagnant les éléments précités, mis en suspension dans un bain de sels fondus dont la température assure la volatilité de l'un au moins des chlorures métalliques formés, lesdits mélanges gazeux étant mis en œuvre successivement dans l'ordre croissant des forces chlorurantes, comme il est indiqué dans les tableaux précédents, par leur injection dans ledit bain, permettent d'extraire successivement de ce bain, et d'une manière très séparée, les chlorures métalliques formés par chaque mélange chlorurant sélectif des oxydes métalliques donnés, en commençant par les oxydes métalliques les moins stables thermodynamiquement et en achevant par les oxydes métalliques les plus stables thermodynamiquement.

Dès lors, l'usage des mélanges chlorurants dans l'ordre décroissant de leur force chlorurante conduirait à un résultat contraire à la chloruration sélective. Ainsi, l'usage du mélange chlorurant le plus puissant, tel que $Cl_2$ gaz + CO gaz + HCl gaz ou $COCl_2$ gaz + HCl gaz, pour chlorurer en bain de sels fondus un mélange d'oxydes métalliques, provoquerait la chloruration de tous les oxydes métalliques présents et, de ce fait, n'offrirait plus le caractère sélectif de chloruration.

Le procédé selon l'invention de chloruration sélective est très souple car, pour l'usage de l'un des mélanges chlorurants particulier, il est possible d'extraire simultanément du bain de chloruration deux, ou plus, chlorures métalliques formés ultérieurement séparés par l'un des procédés appartenant à l'art connu. Par exemple, s'il est souhaitable d'extraire simultanément le fer et le titane présents dans le bain de sels fondus par chloruration de leurs oxydes, le mélange chlorurant injecté dans ledit bain sera celui recommandé pour la chloruration du $TiO_2$ dont la force chlorurante est suffisante pour provoquer simultanément la chloruration des oxydes de fer et de titane.

Les mélanges d'oxydes métalliques, simples ou complexes, d'origine naturelle ou synthétique, comportant les éléments à valoriser, aluminium, titane, fer et silicium, ainsi que les impuretés accompagnant les éléments précités, qui peuvent être soumis à une chloruration sélective en bains de sels fondus, comprennent les argiles, les bauxites, les kaolins, les minerais silico-alumineux tels que les schistes houillers ou bitumeux, les boues rouges, les concentrés d'oxydes, l'anorthosite, le feldspath, l'ilménite, etc. Ces mélanges d'oxydes sont généralement soumis à un broyage préalable de telle manière que leur granulométrie moyenne soit inférieure à 150 µm.

Les mélanges d'oxydes métalliques peuvent être utilisés tels quels ou bien subir un traitement préalable à la chloruration sélective pour en éliminer au moins une partie des impuretés présentes par tout moyen connu de l'homme de l'art.

Les mélanges d'oxydes broyés sont introduits et mis en suspension dans le bain de sels fondus, constitué par au moins un halogénure alcalin et/ou alcalino-terreux, porté à la température adéquate et soumis à une agitation. Chaque mélange chlorurant sélectif est alors insufflé dans le bain de sels fondus en quantité au moins égale à la stœchiométrie par rapport à l'oxyde métallique à chlorurer et, dans la grande majorité, supérieure à celle-ci afin de réaliser la chloruration totale dudit oxyde dans le bain.

Le chlorure métallique ainsi produit est extrait dès que la composition du bain le permet. Il est alors entraîné par l'excédent du mélange chlorurant sélectif et les gaz nés de la chloruration, en formant un effluent gazeux. Le chlorure métallique extrait du bain est alors séparé de cet effluent gazeux par tout moyen approprié et connu de l'homme de l'art, tel que, par exemple, par condensation de la vapeur du chlorure métallique dans une chambre de condensation.

En pratique, le procédé selon l'invention comporte les étapes suivantes:

a) broyage du mélange d'oxydes métalliques d'origine naturelle ou synthétique à une dimension inférieure à 150 µm,

b) calcination du mélange d'oxydes métalliques broyés pour éliminer l'eau présente dans le mélange desdits oxydes,

c) introduction dans le bain de sels fondus du mélange d'oxydes métalliques calcinés, qui est mis en suspension dans ce milieu réactionnel,

d) injection dans le bain de sels fondus du mélange gazeux assurant la chloruration sélective des oxydes de fer, en une quantité au moins égale à la quantité stœchiométrique nécessaire à la chloruration complète sous forme de $FeCl_3$ ou $Fe_2Cl_6$ jusqu'à la détection de la fin de l'extraction gazeuse de $FeCl_3$ ou $Fe_2Cl_6$,

e) injection dans le bain de sels fondus débarrassé des oxydes de fer, du mélange chlorurant sélectif de l'oxyde de titane en une quantité au moins égale à la quantité stœchiométrique nécessaire à la chloruration complète sous forme de $TiCl_4$ de l'oxyde de titane présent dans le bain et ce, jusqu'à la détection de la fin de l'extraction gazeuse de $TiCl_4$,

f) injection dans le bain de sels fondus débarrassé des oxydes de fer et de titane du mélange chlorurant sélectif des oxydes d'aluminium et de silicium en une quantité au moins égale à la quantité stœchiométrique nécessaire à la chloruration complète sous forme de $AlCl_3$ et $SiCl_4$ de ces oxydes présents dans le bain et ce, jusqu'à la détection complète de la fin d'extraction gazeuse de ces deux chlorures;

g) séparation par condensation des chlorures d'aluminium et de silicium.

L'invention sera mieux comprise en se référant à la figure représentant l'un des cas possibles, illustrant le procédé selon l'invention, de chloruration sélective en bains de sels fondus d'une bauxite comportant pour l'essentiel de l'alumine, des oxydes de fer, de l'oxyde de titane et de la silice.

Selon la figure, le minerai bauxitique finement broyé à 150 µm et calciné à une température permettant l'élimination de la quasi-totalité de l'eau présente, est mis en suspension dans un bain de sels fondus constitué d'un mélange de LiCl-KCl et maintenu à une température supérieure à son point de fusion. Un mélange chlorurant gazeux, constitué par de l'HCl gaz et de la vapeur d'eau, est injecté dans le bain de sels fondus, provoquant la seule chloruration, dans cette première étape, du fer présent dans le bain, jusqu'à son épuisement en ce métal.

Les effluents gazeux $G_1$ sortant de la première étape de chloruration (A), formés d'un mélange de $FeCl_3$, $Fe_2Cl_6$, HCl gaz et $H_2O$ vapeur, sont alors introduits dans le condenseur (B) d'où l'on extrait $FeCl_3$, $Fe_2Cl_6$. Quand les effluents gazeux $G_1$ s'appauvrissent en $FeCl_3$, $Fe_2Cl_6$ et deviennent démunis de ces composés, l'injection en mélange chlorurant dans la première étape est arrêtée.

Le bain $L_{11}$ de sels fondus, dépourvu de fer, mais contenant les oxydes de titane, d'aluminium et de silicium, en suspension, est alors traité en (D) selon une deuxième étape de la chloruration.

Les effluents gazeux $G_2$ provenant du condenseur (B), constitués par le mélange chlorurant gazeux n'ayant pas réagi en (A), sont introduits dans un condenseur (C) en même temps qu'un autre mélange gazeux $G_3$ formé d'$H_2$ gaz et de CO gaz. A la sortie de ce condenseur (C), où sont réglées les quantités relatives de chacun des constituants gazeux, est recueilli un effluent gazeux $G_4$, mélange chlorurant, destiné à la deuxième étape de chloruration en (D) formé du mélange de HCl gaz, CO gaz, $H_2$ gaz. Le mélange chlorurant $G_4$ est dès lors injecté en (D), deuxième étape de chloruration, dans le bain de sels fondus $L_{11}$, provoquant la seule chloruration dans cette deuxième étape du titane présent dans le bain jusqu'à épuisement du bain en ce métal.

Les effluents $G_5$ sortant de la deuxième étape de chloruration (D), formés d'un mélange de $TiCl_4$ gaz, de HCl gaz, CO gaz, $H_2$ gaz et de $CO_2$ gaz produit lors de la réaction, sont introduits dans le condenseur (E) d'où l'on extrait le $TiCl_4$.

Quand les effluents gazeux $G_5$ se révèlent démunis de $TiCl_4$, l'injection du mélange chlorurant $G_4$ est arrêtée.

Le bain $L_{12}$ de sels fondus, démuni de fer et de titane, mais contenant encore en suspension les oxydes d'aluminium et de silicium, est introduit en (F) pour y subir une troisième étape de chloruration.

Les effluents $G_6$ provenant du condenseur (E), constitués par le mélange chlorurant gazeux n'ayant pas réagi en (D) et par des gaz produits pendant la deuxième étape de chloruration, reçoivent selon $G_7$ un mélange de CO gaz et $Cl_2$ gaz. Les fractions gazeuses $G_6$ et $G_7$ forment alors le mélange chlorurant $G_8$ destiné à la troisième étape de chloruration en (F), formé d'un mélange de CO gaz, $Cl_2$ gaz, HCl gaz, ainsi que de $H_2$ gaz et $CO_2$ gaz produits lors de la deuxième étape de chloruration.

Le mélange chlorurant $G_8$ est alors injecté en (F) dans le bain de sels fondus $L_{12}$ provoquant la chloruration simultanée de l'alumine et de la silice présente jusqu'à épuisement du bain en ces deux oxydes.

Les effluents gazeux $G_9$ sortant de la troisième étape de chloruration (F) formés d'un mélange de $AlCl_3$ gaz et $Al_2Cl_6$ gaz, $SiCl_4$ gaz, CO gaz, $Cl_2$ gaz, HCl gaz, $H_2$ gaz et $CO_2$ gaz, sont introduits dans le condenseur (G) d'où l'on extrait $AlCl_3$, $Al_2Cl_6$ et $SiCl_4$.

Quand les effluents gazeux $G_9$ se révèlent démunis de $AlCl_3$, $Al_2Cl_6$ gaz et de $SiCl_4$ gaz, l'injection du mélange chlorurant $G_8$ est suspendue.

Le bain $L_{13}$ sortant de la troisième étape de chloruration (F) se révèle être pratiquement démuni de fer, titane, aluminium et silicium et se retrouve ainsi avec ses composants initiaux, c'est-à-dire le mélange fondu de LiCl, KCl, prêt à être recyclé à la première étape (A) de chloruration.

Les effluents $G_{10}$ provenant du condenseur (G) sont alors conduits dans une zone de traitement non représentée.

Le procédé selon l'invention peut être pratiqué indifféremment, d'une manière discontinue ou continue, selon les cas d'espèces relatifs aux mélanges d'oxydes à chlorurer et pour lesquels les effluents gazeux, après condensation des chlorures métalliques, sont réinjectés tels quels ou avec réajustement de leur composition, ou bien sont traités séparément.

*Exemple:*

On a traité, selon le procédé de chloruration sélective faisant l'objet de l'invention, un minerai constitué par une bauxite qui avait la composition suivante en poids:

| | |
|---|---|
| $Al_2O_3$ | 58,1% |
| $Fe_2O_3$ | 6,7% |
| $TiO_2$ | 2,5% |
| $SiO_2$ | 4,0% |
| $H_2O$ | 28,4% |
| Divers | 0,3% |

1 kg de ce minerai calciné à 650°C et finement broyé à une granulométrie de 150 µm a été mis en suspension dans un bain de sels fondus de la première étape de chloruration sélective.

Ce bain avait la composition molaire suivante:

| | |
|---|---|
| LiCl | 58,8% |
| KCl | 41,2% |

et sa température d'usage était de 470°C.

Le bain de sels fondus se trouvait dans un réacteur de chloruration en verre Pyrex, d'une capacité utile de 10 l.

Ledit réacteur était lui-même placé dans une enceinte chauffée, munie d'un dispositif de réglage de la température du milieu réactionnel de telle manière que celle-ci soit maintenue entre 465 et 475°C. Le bain de sels fondus occupait environ les ⅔ de la capacité utile dudit réacteur.

La suspension du minerai dans ledit bain était soumise à une agitation mécanique d'environ 100 t/min.

Enfin, le réacteur de chloruration était également muni d'un dispositif permettant l'introduction et la diffusion des mélanges gazeux chlorurants spécifiques.

Dans une première étape de chloruration, on a introduit dans le bain sous une pression proche de la pression atmosphérique, un mélange gazeux chlorurant constitué par le mélange HCl gaz + $H_2O$ vapeur, dont la composition était définie par les pressions partielles suivantes:

Pression partielle de HCl gaz: P(HCl g) = 0,99 bar

Pression partielle de $H_2O$ vapeur: P($H_2O$ v) = 0,01 bar.

Ce mélange chlorurant était introduit dans le bain à raison de 100 ml/min.

Il a alors été constaté un dégagement d'effluents gazeux formés de vapeurs de $FeCl_3$ et $Fe_2Cl_6$ et de l'excès de HCl gaz et de $H_2O$ vapeur, initialement introduits ou produits pendant la chloruration.

Lesdits effluents étaient alors conduits dans un condenseur maintenu à une température comprise entre 150 et 200°C. Une fraction de ces effluents gazeux était condensée sous la forme d'un solide composé pratiquement de 100% de $FeCl_3$, tandis que l'autre fraction HCl gaz et $H_2O$ vapeur était traitée en passant dans un deuxième condenseur refroidi à une température inférieure à 70°C. On recueillait ainsi la plus grande partie de l'eau produite et l'on récupérait l'HCl n'ayant pas réagi.

Cette première étape de chloruration sélective de l'oxyde de fer a été conduite jusqu'à la disparition de toute condensation de $FeCl_3$. On a alors effectué dans le bain de sels fondus un prélèvement dont l'analyse chimique complète a révélé que, pratiquement, la totalité du fer initialement présent avait été sélectivement chlorurée.

Dans une deuxième étape de chloruration, le bain de sels fondus contenait en suspension les oxydes métalliques suivants: $TiO_2$, $Al_2O_3$, $SiO_2$. On a alors introduit dans ledit bain, sous une pression proche de la pression atmosphérique, un mélange gazeux chlorurant sélectif formé de HCl gaz, CO gaz et $H_2$ gaz, dont la composition était définie par les pressions partielles suivantes:

Pression partielle de HCl gaz: P(HCl) = 0,45 bar
Pression partielle de $H_2$ gaz: P($H_2$) = 0,1 bar
Pression partielle de CO gaz: P(CO) = 0,45 bar

Ce mélange chlorurant était introduit dans le bain à raison de 100 ml/min.

Il a alors été constaté un dégagement d'effluents gazeux formé de vapeurs de $TiCl_4$ et de l'excès de HCl gaz, CO gaz et $H_2$ gaz initialement introduit ou produit lors de la réaction, ainsi que du $CO_2$ produit. Lesdits effluents étaient alors condensés dans un condenseur maintenu à une température comprise entre 50 et 70°C.

Une fraction de ces effluents gazeux était condensée sous la forme d'un liquide composé pratiquement de 100% de $TiCl_4$, tandis que l'autre fraction (HCl gaz, CO gaz, $H_2$ gaz et $CO_2$ gaz) était traitée à part.

Cette deuxième étape de chloruration sélective de l'oxyde de titane a été conduite jusqu'à la disparition de toute condensation de $TiCl_4$.

De même que dans la première étape, on a effectué dans le bain de sels fondus un prélèvement dont l'analyse chimique complète a montré que, pratiquement, la totalité du titane initialement présent avait été sélectivement chlorurée.

Dans une dernière étape de chloruration, le bain de sels fondus contenait en suspension les seuls oxydes d'aluminium et de silicium. Ceux-ci ont été chlorurés dans ledit bain sous une pression proche de la pression atmosphérique au moyen d'un mélange gazeux formé de $COCl_2$ gaz et HCl gaz, dont la composition était définie par les pressions partielles suivantes:

Pression partielle de $COCl_2$ gaz: P($COCl_2$) = 0,9 bar

Pression partielle de HCl gaz: P(HCl) = 0,1 bar

Ce mélange chlorurant était introduit dans le bain à raison de 100 ml/min.

Il a alors été constaté un dégagement d'effluents gazeux formés de vapeurs de $AlCl_3$, $Al_2Cl_6$, de $SiCl_4$ et de $COCl_2$ gaz, CO gaz, $Cl_2$ gaz et $CO_2$ gaz produit lors de la chloruration.

Ces effluents étaient conduits dans un premier condenseur maintenu à une température comprise entre 100 et 120°C de manière à provoquer la condensation du chlorure d'aluminium solide, puis dans un second condenseur maintenu à une température inférieure à 30°C afin de provoquer la condensation du tétrachlorure de silicium liquide.

Les effluents gazeux non condensés étaient recueillis et traités à part.

On a effectué dans le bain de sels fondus un dernier prélèvement dont l'analyse a montré que, en pratique, la totalité de l'alumine et de la silice initialement présentes avait été chlorurée.

## Revendications

1. Procédé d'extraction des constituants métalliques d'une matière contenant des oxydes de fer, titane, aluminium, silicium simples ou complexes, d'origine naturelle ou synthétique, qui consiste à broyer et calciner la matière de départ, puis à la traiter en des étapes successives par divers agents chlorurants gazeux, caractérisé en ce que l'on met en suspension la matière calcinée dans un bain de sels fondus à température sensiblement constante comprise entre 350 et 750°C, on y introduit un premier agent chlorurant constitué soit d'un mélange HCl gaz + $H_2O$ vapeur, soit d'un mélange $Cl_2$ gaz + $O_2$ gaz + HCl gaz, on extrait le chlorure ferrique gazeux formé, on introduit dans le bain résultant un deuxième agent chlorurant constitué d'un mélange HCl gaz + CO gaz + $H_2$ gaz, on extrait le chlorure de titane gazeux formé, on introduit dans le bain résultant un troisième agent chlorure constitué, soit d'un mélange $Cl_2$ gaz + CO gaz + HCl gaz, soit d'un mélange $COCl_2$ gaz + HCl gaz, on extrait le mélange gazeux des chlorures de silicium et d'aluminium formés, enfin on sépare de façon connue les chlorures de ce dernier mélange.

2. Procédé selon la revendication 1, caractérisé en ce que, dans le premier mélange chlorurant gazeux $HCl + H_2O$, la pression partielle de HCl est de 0,1 à 1 bar, de préférence de 0,7 à 1 bar et la pression partielle de la vapeur d'eau est au plus égale à 0,1 fois la pression partielle de HCl.

3. Procédé selon la revendication 1, caractérisé en ce que, dans le premier mélange chlorurant gazeux $Cl_2 + O_2 + HCl$, la pression partielle du chlore est de 0,1 à 1 bar, de préférence de 0,7 à 1 bar, la pression partielle de l'oxygène est au plus égale à 0,1 bar, de préférence au plus égale à 0,001 bar, et la pression partielle de HCl est au plus égale à 0,01 bar, de préférence égale à cette valeur.

4. Procédé d'extraction des constituants métalliques d'une matière contenant des oxydes de fer, titane, aluminium, silicium simples ou complexes, d'origine naturelle ou synthétique, dont de l'alumine réactive ou un composé susceptible d'en produire, qui consiste à broyer et calciner la matière de départ, puis à la traiter en des étapes successives par divers agents chlorurants gazeux, caractérisé en ce que la matière calcinée est mise en suspension dans un bain de sels fondus à température sensiblement constante comprise entre 350 et 750°C, on y introduit un premier agent chlorurant constitué d'un mélange HCl gaz et $H_2$ gaz, on transforme ainsi la seule alumine active en chlorure d'aluminium gazeux et l'oxyde de fer en chlorure ferreux dissous dans le bain, on extrait le chlorure d'aluminium gazeux formé, on introduit dans le bain résultant un deuxième agent chlorurant constitué d'un mélange gazeux de chlore et d'oxygène, on transforme ainsi le chlorure ferreux en chlorure ferrique et l'on extrait ce chlorure ferrique gazeux formé, on introduit dans le bain résultant un troisième agent chlorurant constitué d'un mélange HCl gaz + CO gaz + $H_2$ gaz, on extrait le chlorure de titane gazeux formé, on introduit dans le bain résultant un quatrième agent chlorurant constitué, soit d'un mélange $Cl_2$ gaz + CO gaz + HCl gaz, soit d'un mélange $COCl_2$ gaz + HCl gaz, on extrait le mélange gazeux des chlorures de silicium et d'aluminium formés, enfin on sépare de façon connue les chlorures de ce dernier mélange.

5. Procédé selon la revendication 4, caractérisé en ce que, dans le premier agent chlorurant gazeux $HCl + H_2$, la pression partielle de HCl est de 0,1 à 1 bar, de préférence de 0,3 à 0,9 bar et la pression partielle de $H_2$ est de 0,01 à 0,9 bar, de préférence de 0,05 à 0,2 bar.

6. Procédé selon l'une des revendications 4 ou 5, caractérisé en ce que, dans le deuxième agent chlorurant gazeux, la pression partielle de chlore est de 0,01 à 1 bar et la pression partielle d'oxygène est au plus égale à 0,1 bar, de préférence au plus égale à 0,01 bar.

7. Procédé selon l'une des revendications 1 à 6, caractérisé en ce que, dans le mélange chlorurant gazeux $HCl + CO + H_2$, la pression partielle de HCl est de 0,45 à 0,8 bar, la pression partielle de CO est de 0,45 à 0,1 bar et la pression partielle de $H_2$ est de 0,05 à 0,15 bar, de préférence 0,5 bar.

8. Procédé selon l'une des revendications 1 à 7, caractérisé en ce que, dans le mélange chlorurant gazeux $Cl_2 + CO + HCl$, la pression partielle de $Cl_2$ est de 0,01 à 0,5 bar, la pression partielle de CO est de 0,01 à 0,5 bar et la pression partielle de HCl est inférieure à 1 bar.

9. Procédé selon l'une des revendications 1 à 7, caractérisé en ce que, dans le mélange chlorurant gazeux $COCl_2 + HCl$, la pression partielle de $COCl_2$ est de 0,01 à 1 bar et la pression partielle de HCl est inférieure à 1 bar.

10. Procédé selon l'une des revendications 1 à 6, caractérisé en ce que les chlorures d'aluminium et de silicium sont séparés de leur mélange par condensation.

11. Procédé selon l'une des revendications 1 ou 7 à 10, caractérisé en ce que l'on supprime le premier stade de chloruration, on introduit dans le bain initial l'agent chlorurant HCl gaz + CO gaz + $H_2$ gaz et on extrait le mélange gazeux des chlorures de fer et de titane formés.

12. Procédé selon l'une des revendications 4 ou 5, caractérisé en ce que l'on supprime le deuxième stade de chloruration, on introduit dans le bain résultant du premier stade de chloruration le troisième agent chlorurant $HCl + CO + H_2$ et on extrait le mélange gazeux des chlorures de fer et de titane formés.

13. Procédé selon l'une des revendications 1 à 12, caractérisé en ce que le bain de sels fondus est composé d'au moins un halogénure alcalin et/ou alcalino-terreux.

14. Procédé selon l'une des revendications 1 à 13, caractérisé en ce que la température du bain de sels fondus est de 450 à 650°C.

15. Procédé selon l'une des revendications 1 à 14, caractérisé en ce que la matière de départ est une argile, une bauxite, un kaolin, un schiste houiller ou bitumineux, une boue rouge, un concentré d'oxydes, une anorthosite, un feldspath, une ilménite.

## Patentansprüche

1. Verfahren zur Extraktion der metallischen Bestandteile eines Materials, das einfache oder komplexe Oxide von Eisen, Titan, Aluminium, Silizium, natürlichen oder synthetischen Ursprungs, enthält, das darin besteht, das Ausgangsmaterial zu zerkleinern und zu kalzinieren, es dann in aufeinanderfolgenden Stufen mit verschiedenen gasförmigen Chlorierungsmitteln zu behandeln, dadurch gekennzeichnet, dass man das kalzinierte Material in einem Bad geschmolzener Salze bei praktisch konstanter Temperatur im Bereich von 350 bis 750°C in Suspension bringt, hier ein erstes Chlorierungsmittel einführt, das entweder aus einem Gemisch von HCl-Gas + $H_2O$-Dampf oder aus einem Gemisch von $Cl_2$-Gas + $O_2$-Gas + HCl-Gas besteht, das gebildete gasförmige Eisen(III)-Chlorid extrahiert, in das resultierende Bad ein zweites Chlorierungsmittel einführt, das aus einem Gemisch von HCl-Gas + CO-Gas + $H_2$-Gas besteht, das gebildete gasförmige Titanchlorid extrahiert, in das resultierende Bad ein drittes Chlorierungsmittel einführt, das entweder aus einem Ge-

misch von $Cl_2$-Gas + CO-Gas + HCl-Gas oder aus einem Gemisch von $COCl_2$-Gas + HCl-Gas besteht, das gasförmige Gemisch der gebildeten Silizium- und Aluminiumchloride extrahiert und schliesslich in bekannter Weise die Chloride dieses letzten Gemisches trennt.

2. Verfahren nach Anspruch 1, dadurch gekennzeichnet, dass im ersten chlorierenden, gasförmigen ($HCl + H_2O$)-Gemisch der Partialdruck von HCl 0,1 bis 1 bar vorzugsweise 0,7 bis 1 bar ist und der Partialdruck des Wasserdampfes höchstens gleich dem 0,1 fachen des HCl-Partialdrucks ist.

3. Verfahren nach Anspruch 1, dadurch gekennzeichnet, dass im ersten chlorierenden, gasförmigen ($Cl_2 + O_2 + HCl$)-Gemisch der Partialdruck des Chlors 0,1 bis 1 bar, vorzugsweise 0,7 bis 1 bar ist, der Partialdruck des Sauerstoffs höchstens gleich 0,1 bar, vorzugsweise höchstens gleich 0,001 bar ist und der Partialdruck von HCl höchstens gleich 0,01 bar, vorzugsweise gleich diesem Wert ist.

4. Verfahren zur Extraktion der metallischen Bestandteile eines Materials natürlichen oder synthetischen Ursprungs, das einfache oder komplexe Oxide von Eisen, Titan, Aluminium, Silizium enthält, wobei reaktives Aluminiumoxid oder eine zur Erzeugung desselben geeignete Verbindung vorliegt, das darin besteht, das Ausgangsmaterial zu zerkleinern und zu kalzinieren, es dann in aufeinanderfolgenden Stufen mit verschiedenen gasförmigen Chlorierungsmitteln zu behandeln, dadurch gekennzeichnet, dass das kalzinierte Material in einem Bad geschmolzener Salze bei praktisch konstanter Temperatur im Bereich von 350 bis 750°C in Suspension gebracht wird, man hier ein erstes Chlorierungsmittel einführt, das aus einem Gemisch von HCl-Gas und $H_2$-Gas besteht, so nur das aktive Aluminiumoxid in gasförmiges Aluminiumchlorid und das Eisenoxid in Eisen(II)-Chlorid umwandelt, das im Bad gelöst ist, das gebildete gasförmige Aluminiumoxid extrahiert, in das resultierende Bad ein zweites Chlorierungsmittel einführt, das aus einem gasförmigen Gemisch von Chlor und Sauerstoff besteht, so das Eisen(II)-Chlorid in Eisen(III)-Chlorid umwandelt und dieses gebildete gasförmige Eisen(III)-Chlorid extrahiert, in das resultierende Bad ein drittes Chlorierungsmittel einführt, das aus einem Gemisch von HCl-Gas + CO-Gas + $H_2$-Gas besteht, das gebildete gasförmige Titanchlorid extrahiert, in das resultierende Bad ein viertes Chlorierungsmittel einführt, das entweder aus einem Gemisch von $Cl_2$-Gas + CO-Gas + HCl-Gas oder aus einem Gemisch von $COCl_2$-Gas + HCl-Gas besteht, das gasförmige Gemisch der gebildeten Silizium- und Aluminiumchloride extrahiert und schliesslich in bekannter Weise die Chloride dieses letzten Gemisches trennt.

5. Verfahren nach Anspruch 4, dadurch gekennzeichnet, dass im ersten chlorierenden, gasförmigen ($HCl + H_2$)-Mittel der Partialdruck von HCl 0,1 bis 1 bar, vorzugsweise 0,3 bis 0,9 bar ist und der Partialdruck von $H_2$ 0,01 bis 0,9 bar, vorzugsweise 0,05 bis 0,2 bar ist.

6. Verfahren nach einem der Ansprüche 4 oder 5, dadurch gekennzeichnet, dass im zweiten chlorierenden, gasförmigen Mittel der Partialdruck von Chlor 0,01 bis 1 bar ist und der Partialdruck von Sauerstoff höchstens gleich 0,1 bar, vorzugsweise höchstens gleich 0,01 bar ist.

7. Verfahren nach einem der Ansprüche 1 bis 6, dadurch gekennzeichnet, dass im chlorierenden, gasförmigen ($HCl + CO + H_2$)-Gemisch der Partialdruck von HCl 0,45 bis 0,8 bar ist, der Partialdruck von CO 0,45 bis 0,1 bar ist und der Partialdruck von $H_2$ 0,05 bis 0,15 bar, vorzugsweise 0,1 bar ist.

8. Verfahren nach einem der Ansprüche 1 bis 7, dadurch gekennzeichnet, dass im chlorierenden, gasförmigen ($Cl_2 + CO + HCl$)-Gemisch der Partialdruck von $Cl_2$ 0,01 bis 0,5 bar ist, der Partialdruck von CO 0,01 bis 0,5 bar ist und der Partialdruck von HCl unter 1 bar ist.

9. Verfahren nach einem der Ansprüche 1 bis 7, dadurch gekennzeichnet, dass im chlorierenden, gasförmigen ($COCl_2 + HCl$)-Gemisch der Partialdruck von $COCl_2$ 0,01 bis 1 bar ist und der Partialdruck von HCl unter 1 bar ist.

10. Verfahren nach einem der Ansprüche 1 bis 6, dadurch gekennzeichnet, dass die Aluminium- und Siliziumchloride aus ihrem Gemisch durch Kondensation getrennt werden.

11. Verfahren nach einem der Ansprüche 1 oder 7 bis 10, dadurch gekennzeichnet, dass man die erste Chlorierungsstufe auslässt, in das anfängliche Bad das (HCl-Gas + CO-Gas + $H_2$-Gas)-Chlorierungsmittel einführt und das gasförmige Gemisch der gebildeten Eisen- und Titanchloride extrahiert.

12. Verfahren nach einem der Ansprüche 4 oder 5, dadurch gekennzeichnet, dass man die zweite Chlorierungsstufe auslässt, in das von der ersten Chlorierungsstufe resultierende Bad das dritte ($HCl + CO + H_2$)-Chlorierungsmittel einführt und das gasförmige Gemisch der gebildeten Eisen- und Titanchloride extrahiert.

13. Verfahren nach einem der Ansprüche 1 bis 12, dadurch gekennzeichnet, dass das Bad geschmolzener Salze aus wenigstens einem Alkalihalogenid und/oder Erdalkalihalogenid zusammengesetzt ist.

14. Verfahren nach einem der Ansprüche 1 bis 13, dadurch gekennzeichnet, dass die Temperatur des Bades geschmolzener Salze 450 bis 650°C ist.

15. Verfahren nach einem der Ansprüche 1 bis 14, dadurch gekennzeichnet, dass das Ausgangsmaterial ein Ton, ein Bauxit, ein Kaolin, ein Schieferton oder Ölschiefer, ein Rotschlamm, ein Konzentrat von Oxiden, ein Anorthosit, ein Feldspat, ein Ilmenit ist.

## Claims

1. Process for extraction of the metallic constituents from a material containing simple or complex oxides of iron, titanium, aluminium, silicon, of natural or synthetic origin, which consists of grinding and calcining the material to be

separated, then treating it in successive steps by various gaseous chlorinating agents, characterised in that the calcined material is suspended in a molten salt bath at a substantially constant temperature comprised between 350 and 750°C, a first chlorinating agent is introduced therein consisting either of a mixture of HCl gas and steam or of a mixture of $Cl_2$ gas, $O_2$ gas and HCl gas, the gaseous ferric chloride formed is extracted, a second chlorinating agent consisting of a mixture of HCl gas, CO gas and $H_2$ gas is introduced into the resulting bath, the gaseous titanium chloride formed is extracted, a third chlorinating agent consisting either of a mixture of $Cl_2$ gas, CO gas and HCl gas or of a mixture of $COCl_2$ gas and HCl gas is introduced into the resulting bath, the gaseous mixture of silicon and aluminium chlorides formed is extracted, and finally the chlorides of this last mixture are separated in known manner.

2. Process according to claim 1, characterised in that, in the first chlorinating mixture of gaseous HCl and $H_2O$, the partial pressure of HCl is from 0.1 to 1 bar, preferably from 0.7 to 1 bar, and the partial pressure of the steam is at most equal to 0.1 time the partial pressure of HCl.

3. Process according to claim 1, characterised in that, in the first chlorinating mixture of gaseous $Cl_2$, $O_2$ and HCl, the partial pressure of the chlorine is from 0.1 to 1 bar, preferably from 0.7 to 1 bar, the partial pressure of the oxygen is at most equal to 0.1 bar, preferably at most equal to 0.001 bar, and the partial pressure of HCl is at most equal to 0.01 bar, preferably equal to this value.

4. Process for extraction of the metallic constituents from a material containing simple or complex oxides of iron, titanium, aluminium, silicon, of natural or synthetic origin, including reactive alumina or a compound capable of producing it, which consists of grinding and calcining the material to be separated, then treating it in successive steps by various gaseous chlorinating agents, characterised in that the calcined material is suspended in a molten salt bath at a substantially constant temperature comprised between 350 and 750°C, a first chlorinating agent consisting of a mixture of HCl gas and $H_2$ gas is introduced therein, only the active alumina is thus transformed into gaseous aluminium chloride and the iron oxide is transformed into ferrous chloride dissolved in the bath, the gaseous aluminium chloride formed is extracted, a second chlorinating agent consisting of a gaseous mixture of chlorine and oxygen is introduced into the resulting bath, the ferrous chloride is thus transformed into ferric chloride and this gaseous ferric chloride formed is extracted, a third chlorinating agent consisting of a mixture of HCl gas, CO gas and $H_2$ gas is introduced into the resulting bath, the gaseous titanium chloride formed is extracted, a fourth chlorinating agent consisting either of a mixture of $Cl_2$ gas, CO gas and HCl gas or of a mixture of $COCl_2$ gas and HCl gas is introduced into the resulting bath, the gaseous mixture of silicon and aluminium chlorides formed is extracted, and finally the chlorides of this last mixture are separated in known manner.

5. Process according to claim 4, characterised in that, in the first chlorinating agent of gaseous HCl and $H_2$, the partial pressure of HCl is from 0.1 to 1 bar, preferably from 0.3 to 0.9 bar, and the partial pressure of $H_2$ is from 0.01 to 0.9 bar, preferably from 0.05 to 0.2 bar.

6. Process according to one of claims 4 or 5, characterised in that, in the second gaseous chlorinating agent, the partial pressure of chlorine is from 0.01 to 1 bar and the partial pressure of oxygen ist at most equal to 0.1 bar, preferably at most equal to 0.01 bar.

7. Process according to one of claims 1 to 5, characterised in that, in the chlorinating mixture of gaseous HCl, CO and $H_2$, the partial pressure of HCl is from 0.45 to 0.8 bar, the partial pressure of CO is from 0.45 to 0.1 bar and the partial pressure of $H_2$ is from 0.05 to 0.15 bar, preferably 0.1 bar.

8. Process according to one of claims 1 to 7, characterised in that, in the gaseous chlorinating mixture of $Cl_2$, CO and HCl, the partial pressure of $Cl_2$ is from 0.01 to 0.5 bar, the partial pressure of CO is from 0.01 to 0.5 bar and the partial pressure of HCl is less than 1 bar.

9. Process according to one of claims 1 to 7, characterised in that, in the gaseous chlorinating mixture of $COCl_2$ and HCl, the partial pressure of $COCl_2$ is from 0.01 to 1 bar and the partial pressure of HCl is less than 1 bar.

10. Process according to one of claims 1 to 6, characterised in that the chlorides of aluminium and silicon are separated from their mixture by condensation.

11. Process according to one of claims 1 or 7 to 10, characterised in that the first chlorination stage is suppressed, the HCl gas, CO gas and $H_2$ gas chlorinating agent is introduced into the initial bath and the gaseous mixture of iron and titanium chlorides formed is extracted.

12. Process according to one of claims 4 or 5, characterised in that the second chlorination stage is suppressed, the HCl, CO and $H_2$ third chlorinating agent is introduced into the bath resulting from the first chlorination stage, and the gaseous mixture of iron and titanium chlorides formed is extracted.

13. Process according to one of claims 1 to 12, characterised in that the molten salt bath is composed of at least one alkali and/or alkaline earth metal halide.

14. Process according to one of claims 1 to 13, characterised in that the temperature of the molten salt bath is from 450 to 650°C.

15. Process according to one of claims 1 to 14, characterised in that the material to be separated is a clay, a bauxite, a kaolin, a coal or bituminous shale, a red mud, an oxide concentrate, an anorthosite, a feldspar or an ilmenite.

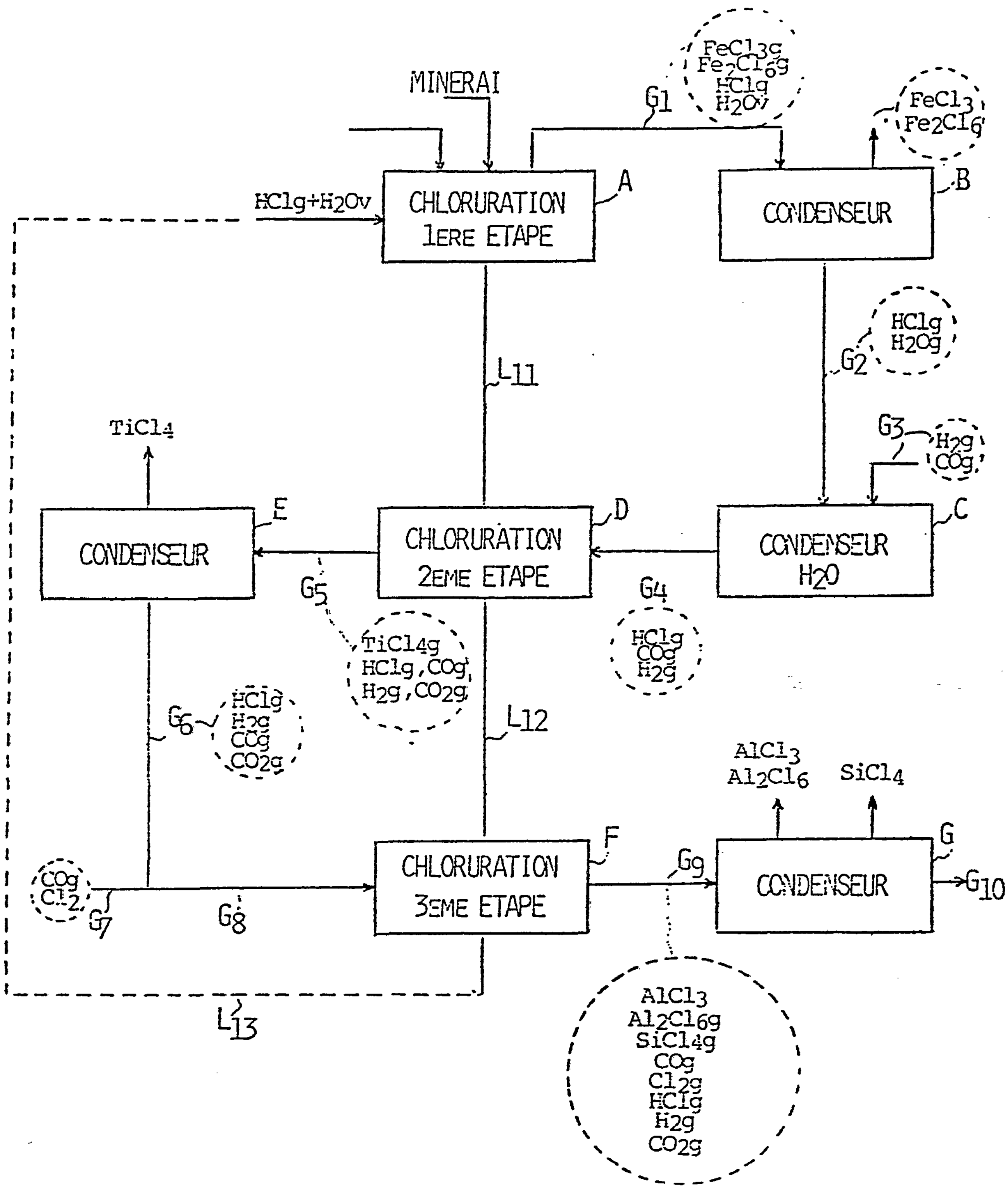
MINERAI
G1
FeCl3g
Fe2Cl6g
HClg
H2Ov
FeCl3
Fe2Cl6
HClg+H2Ov
CHLORURATION 1ERE ETAPE
A
CONDENSEUR
B
L11
G2
HClg
H2Og
G3
H2g
COg
TiCl4
CONDENSEUR
E
CHLORURATION 2EME ETAPE
D
CONDENSEUR H2O
C
G5
G4
TiCl4g
HClg, COg
H2g, CO2g
HClg
COg
H2g
G6
HClg
H2g
COg
CO2g
L12
AlCl3
Al2Cl6
SiCl4
COg
Cl2
G7
G8
CHLORURATION 3EME ETAPE
F
G9
CONDENSEUR
G
G10
L13
AlCl3
Al2Cl6g
SiCl4g
COg
Cl2g
HClg
H2g
CO2g

FIG. 1